# EUROPEAN PATENT SPECIFICATION

(11) **EP 2 277 282 B1**
(45) Date of publication and mention of the grant of the patent: **11.07.2012**
(21) Application number: 09750169.6
(22) Date of filing: 20.05.2009
(51) Int. Cl.: H04L 12/24, H04L 12/40

(54) **System for automatic configuration of a network of devices**
System zur Automatikkonfiguration eines Gerätenetzwerks
Système de configuration automatique d'un réseau de dispositifs

(30) Priority: 21.05.2008 IT MO20080148
(43) Date of publication of application: 26.01.2011
(73) Proprietor: Reggiane Cranes and Plants S.P.A., 42100 Reggio Emilia (IT)
(72) Inventor: VENZANO, Daniele, I-16126 Genova (IT); UBERTELLI, Alberto, I-16014 Ceranesi (GE) (IT)
(74) Representative: Hofmann, Matthias
(86) International application number: PCT/IB2009/005662
(87) International publication number: WO 2009/141712

(56) References cited:
- US-A1- 2003 101 251
- "USING Network Node Manager, HP Openview" HP OPENVIEW, [Online] vol. ED. 1, 1 April 1997 (1997-04-01), pages 1-51, XP002491942 Retrieved from the Internet: URL:http://www.chipweb.de/knoll/HP/Dokumen te/j1136-90002.pdf> [retrieved on 2008-08-11]

## Description

### Technical Field

The present invention relates to a system for the creation and configuration of a network of devices, particularly of the type of a system used for the rapid development of applications suitable for the management and the control of multibus networks of devices in the industrial automation or automotive sectors.

### Background Art

The use is known of systems for the rapid development of applications, also known by the acronym RAD (Rapid Application Development), which permit the development of control and automation software for devices or networks, and which do not require the user to have particular programming skills or the detailed knowledge of specific languages or platforms for the development of applications.

Such systems are used, for example, to develop applications dedicated to controlling user interface devices, such as the so-called HMI (Human Machine Interface) devices, or to develop applications dedicated to controlling devices such as PLCs (Programmable Logic Controllers) within the field of industrial automation or ECU (Electronic Control Unit) devices in the automotive industry.

The known systems generally comprise:
- design means for designing the configuration of one or more networks of proprietary devices in a finite and defined group of devices and types of networks;
- automatic generation means for the automatic generation of the management and control code of the network of proprietary devices starting with the designed configuration.

In particular, the design means can he used by a user to configure the parameters and the messages of the network devices and to configure one or more management and control graphic Interfaces for one or more of the network devices.

Subsequently, the generated management and control code is compiled, for example, by means of a top-level compiler, to make the executable code of the network devices.

These known systems, however, are susceptible to upgrading, aimed in particular at making the initial design Phase of the network of devices easier and quicker.

Patent application US 2003:0101251 A describes a system for automatically generating network configuration data.

### Object of the Invention

The main aim of the present invention is to provide a system for the creation and automatic configuration of multibus networks of non-proprietary devices, that allows creating and configuring one or more networks and/or devices in a simple and quick way.

A further object of the present invention is to provide a system for the creation and automatic configuration of a network of devices which permits achieving the mentioned upgrading in the ambit of a simple, rational, easy, effective to use and low cost solution.

The above objects are achieved by the system of claim 1. Brief Description of the Drawings

Other characteristics and advantages of the present invention will become more evident from the description of a preferred, but not sole, embodiment of a system, for the creation and configuration of a network of devices, illustrated purely as an example but not limited to the annexed drawings in which:

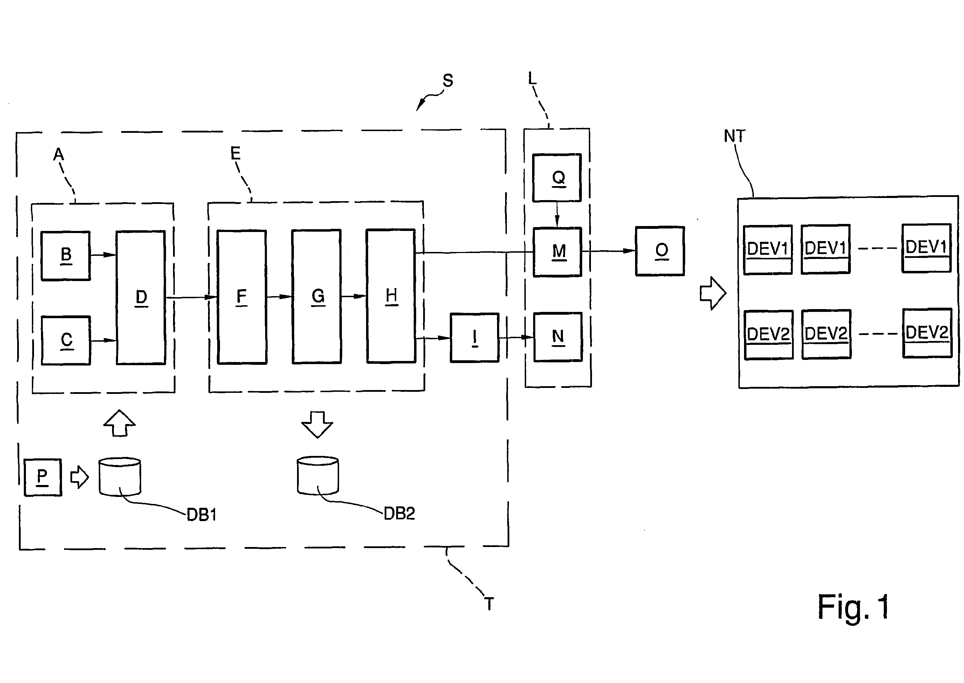

Figure 1 is a general diagram of the system according to the invention.

### Embodiments of the Invention

With particular reference to such figures, by S is globally indicated a system for the creation and configuration of a network of devices, particularly of the type used for the rapid development of applications suitable for the management and the control of networks of devices in the industrial automation or automotive sectors.

With particular but not sole reference to the present description, it is pointed out that by the expression "networks of devices", is meant networks in which one or more channels, such as buses of the CAN2.0A/B, Flex-Ray, RS232, RS422, RS485, Ethernet types and other field buses, with CanOpen, J1939, ISOBUS, NMEA2000 protocols, etc., link up a plurality of human machine interfaces and/or a plurality of management and control devices such as PLCs (Programmable Logic controller), ECUs (Electronic Control Unit), etc.

Such network of devices is generically indicated in figure 1 with the reference NT and is considered defined by one or more channels linking together several first devices DEV1, of the management and control device type, and several second devices DEV2, of the human machine interface device type.

The system S comprises design means T suitable for allowing a user to design the configuration of one or more networks of devices NT.

The system S also comprises automatic generation means L for the automatic generation of the management and control code of the network of devices NT, starting with the initially designed configuration.

In particular, the design means T comprise realisation means of at least a graphic model of the network of devices NT, indicated altogether in figure 1 by the reference A. In point of fact, the user of the design means T has at disposal a graphic interface suitable for allowing the reproduction of a graphic model of the network of devices NT to be configured.

The realisation means A of the graphic model comprise first selection means B, suitable for allowing the user to select one or more models of first or second devices DEV1 or DEV2 of the network of devices NT, selected from a predefined group of possible models of available first or second devices DEV1 or DEV2. More specifically, device models can be selected of the control unit, board, sensor, display type, etc.

Furthermore, the realisation means A of the graphic model comprise second selection means C, suitable for allowing the user to select one or more channel models for the electronic connection of a plurality of first or second devices DEV 1 or DEV2, selected from a predefined group of possible available channel models. In this specific case, channel models can be selected such as buses of the CAN2.0A/B, Flex-Ray, RS232, RS422, RS485, Ethernet type and other field buses, with CanOpen, J1939, ISOBUS, NMEA2000 or other protocols.

Usefully, both the models of the first or second devices DEV1 and DEV2 and the models of the connection channels between such devices can be stored inside a suitable first memory unit DB 1 of the system S, of the mass memory type or the like.

Furthermore, the system S has entering means P usable by an Operator to store new models of first or second devices DEV1 and DEV2 inside the first memory unit DB 1.

Advantageously, the realisation means A provide means for drawing the graphic model of the network of devices NT, schematized in figure 1 with the block D, made starting with the models of the first or second selected devices DEV 1 and DEV2 and with the models of the selected channels.

In particular; the means for the drawing D can have a suitable drawing area on the graphic Interface of the system S, on which the user can arrange the models of the first or second selected devices DEV1 and DEV2, connecting these suitably the one to the other with the selected communication channel.

Furthermore, the design means T have first configuration means E, suitable for allowing the user to configure the parameters and the messages of the first or second selected devices DEV1 and DEV2 and arranged inside the graphic model of the network of devices NT.

In particular, the first configuration means E comprise first definition means F for defining the parameters of each of the first or the second devices DEV1 and DEV2. Such parameters can comprise, for example, attributes such as parameter name, unit, parameter type, current value, default value, minimum and maximum values, description of parameter, etc.

The first configuration means E also comprise second definition means G for defining the messages and the variables shared by the first or the second selected devices DEV1 and DEV2 and arranged inside the graphic model of the network of devices NT. Such messages can have attributes such as, for example, message name, sender, identification, transmission times, number of message bytes, description of the message, etc., according to the definition of the communication protocol between the devices. The shared variables can contain information such as, for example, name of variable, type of variable, position in bytes/bits inside the message, description of the variable or other additional information.

The first configuration means E can also comprise third definition means H for defining the persistent variables of the network of first or second selected devices DEV 1 and DEV2 and arranged inside the graphic model of the network of devices NT, such as system setting parameters, etc.

Usefully, the design means T have second configuration means 1, suitable for allowing the user to configure a graphic interface for the second user interface (HMI) devices DEV2 selected and arranged inside the graphic model of the network of devices NT.

In particular, the second configuration means 1 comprise means for the realisation of one or more interlinked graphic pages, each of which has one or more Emotional elements that can be selected or in any case viewed by an operator of the network of devices NT for the management and/or control of the first devices DEV1. Such functional elements can be positioned inside the graphic page, can be configured by the user and by the system S and can comprise, for example, images, static or dynamic text, buttons associable with predetermined events, progressive bars, hands, date/time, etc.

Usefully, the parameters of the first or second devices DEV1 and DEV2, the messages and the variables shared by such devices, the persistent variables of the network of devices NT and the above graphic page, can be stored inside a suitable second memory unit DB2 of the system S, of the type of a mass memory or the like.

As shown in figure 1, the above automatic generation means L for the automatic generation of the management and control code comprise first creation means M, suitable for creating the parameters and the messages configured by the user of the system S by means of the first configuration means E. In point of fact, the first creation means M generate a first configuration file, such as a source file in language "C" or other language (CoDeSys, assembler or other high-level language).

Subsequent compilation means O of the management and control code, of the type of a compiler C or other language (CoDeSys, assembler or other high-level language), allow generating a code that can be executed by the first or second devices DEV1 and DEV2 of the network of devices NT.

Usefully, the creation means M can comprise selection means Q for selecting the source code format, before the creation of the source file.

The automatic generation means L for the generation of the management and control code also comprise second creation means N, suitable for creating the graphic Interface for the second devices DEV2 previously configured by the user of the system S by means of the second configuration means I.

Usefully, the system S can comprise means for updating the management and control code for one or more first or second devices DEV1 or DEV2 to be updated by means of loading of the updated code.

Furthermore, the system S can comprise means for recording events during the operation of the network of devices NT. The recorded events can comprise, e.g., active and historical alarms and pre-alarms, operating information predefined during the project phase and parameters relating to the operation of the communication channel.

Usefully, the system S can comprise means for identifying and authenicating operators in charge of one or more of the first or second devices DEV1 or DEV2 of the network of devices NT.

Furthermore, the system S can comprise means for allowing the remote access to the network of devices NT of operators in Charge or for amendments to or updating of the management and control code.

In point of fact, it has been ascertained how the described invention achieves the proposed objects, and in particular the fact is underlined that the presence of the realisation means of a graphic model of the network of devices allows a more versatile configuration of the network of devices.

The invention thus conceived is susceptible to numerous modifications and variations, all of which falling within the scope of the inventive concept. Furthermore all the details may be replaced with others that arc technically equivalent.

In practice, the materials used, as well as the contingent shapes and dimensions, may be any according to requirements without moving outside the protection scope of the following claims.

## Claims

1. System (S) for the automatic configuration of an industrial automation network of devices, in particular in the automotive sectors, said system comprising:
- design means (T) for designing the configuration of at least a network of devices (NT, DEV1, DEV2), and
- automatic generation means (L) for automatically generating the management and control code of said network of devices (NT, DEV1, DEV2) starting from the designed configuration,
- wherein said design means (T) comprise:
first configuration means (E) of the parameters and the messages of at least one (DEV1, DEV2) of the devices of said network (NT) of devices, second configuration means (I) of a management and
control graphic interface of at least one (DEV1, DEV2) of the devices of said network (NT) of devices, and
realisation means (A) of at least a graphic model of said network of devices (NT, DEV1, DEV2), and
wherein said automatic generation means (L) for the automatic generation of said management and control code comprise:
first creation means (M) for creating the parameters and the messages configurated by said first configuration means (E), for at least one (DEV1, DEV2) of the devices to be programmed of said network (NT) of devices,
where in
said automatic generation means (L) further comprises second creation means (N) of the graphic interface configured by said second configuration means (I), for at least one (DEV1, DEV2) of the devices to be programmed of said network (NT) of devices and
said system (S) further comprises one or more channels for linking up a plurality of human machine interfaces and/or a plurality of management and control devices, preferably programmable logic controllers and electronic control units, **characterized in that**
said first configuration means (E) of said design means (T) comprise first definition means (F) for defining the parameters of each of said devices,
wherein said first configuration means (E) of said design means (T) comprise second definition means (G) for defining the messages and the variables shared by said devices and
wherein said first configuration means (E) of said design means (T) comprise third definition means (H) for defining the persistent variables of said network of devices.

2. System according to the claim 1 **characterized in that** said realisation means (A) of a graphic model comprise first selection means (B) of at least a model of a device from a predefined group of possible models of available devices.

3. System according to the claim 2, **characterized in that** said realisation means (A) of a graphic model comprise second selection means (C) of at least a model of a channel, suitable for electronically connecting a plurality of said devices, selected from a predefined group of possible models of available channels.

4. System according to claim 3, **characterized in that** said realisation means (A) of a graphic model comprise means for the drawing (D) of said graphic model of the network of devices starting with the models of the selected devices and with the models of the selected channels.

5. System according to claim 4, **characterized in that** it comprises at least a first memory unit (DB1) suitable for storing at least one between said models of available devices and said models of available channels.

6. System according to one or more of the preceding claims, **characterized in that** said second configuration means (I) of a graphic interface comprise means for the realisation of at least one graphic page, which has at least one functional element for the management and/or control of at least one of the devices (DEV1, DEV2) of said network of devices (NT).

7. System according to claim 6, as dependent on claim 5, **characterized in that** it comprises at least a second memory unit (DB2) suitable for storing at least one between the parameters of said devices, the messages and the variables shared by said devices, the persistent variables of said network of devices and said graphic page.

8. System (S) according to one or more of the preceding claims, **characterized in that** it comprises compilation means (O) of said management and control code for the generation of a code that can be executed by at least one of the devices (DEV1, DEV2) of said network (NT) of devices.

9. System according to one or more of the preceding claims, **characterized in that** it comprises means for updating the management and control code for at least one of the devices of said network of devices.

10. System according to one or more of the preceding claims, **characterized in that** it comprises means for recording events during the operation of said network of devices.

11. System according to one or more of the preceding claims, **characterized in that** it comprises means for identifying and authenticating operators in charge of at least one of the devices of said network of devices.

12. System according to one or more of the preceding claims, **characterized in that** it comprises means for the remote access to at least one of the devices of said network of devices.

13. Use of a system (S) according to one of the preceding claims for the creation and automatic configuration of an industrial automation network of devices, in particular in the automotive sectors.

## Patentansprüche

1. System (S) für die automatische Konfiguration eines industriellen Automationsnetzwerkes von Vorrichtungen, insbesondere in den Automotive-Sektoren,
wobei das System umfasst:
- Gestaltungsmittel (T) zum Gestalten der Konfiguration wenigstens eines Netzwerks von Vorrichtungen (NT; DEV1, DEV2), und
- automatische Generierungsmittel (L) zum automatischen Generieren des Management- und Kontrollcodes des Netzwerks von Vorrichtungen (NT; DEV1, DEV2), ausgehend von der gestalteten Konfiguration,
- wobei die Gestaltungsmittel (T) umfassen:
erste Konfigurationsmittel (E) der Parameter und der Mitteilungen von wenigstens einer (DEV1, DEV2) der Vorrichtungen des Netzwerks (NT) von Vorrichtungen, zweite Konfigurationsmittel (I) einer Management- und Kontrollgrafikschnittstelle wenigstens einer (DEV1, DEV2) der Vorrichtungen des Netzwerks (NT) von Vorrichtungen, und
Realisierungsmittel (A) wenigstens eines Grafikmodells des Netzwerks von Vorrichtungen (NT, DEV1, DEV2), und
wobei die automatischen Generierungsmittel (L) für die automatische Generierung des Management- und Kontrollcodes umfassen:
erste Erzeugungsmittel (M) zum Erzeugen der durch die ersten Konfigurationsmittel (E) konfigurierten Parameter und Mitteilungen für wenigstens eine (DEV1, DEV2) der zu programmierenden Vorrichtungen des Netzwerks (NT) von Vorrichtungen,
in welchen die automatischen Generierungsmittel (L) ferner umfassen zweite Erzeugungsmittel (N) der durch die zweiten Konfigurationsmittel (I) konfigurierten Grafikschnittstelle für wenigstens eine (DEV1, DEV2) der zu programmierenden Vorrichtungen des Netzwerks (NT) von Vorrichtungen, und
das System (S) ferner umfasst ein oder mehrere Kanäle zum Verbinden mit einer Mehrzahl von Mensch/Maschine Schnittstellen und/oder einer Mehrzahl von Management- und Kontrolleinrichtungen, vorzugsweise programmierbare Logikcontroller und elektronische Steuereinheiten,
**dadurch gekennzeichnet, dass**
die ersten Konfigurationsmittel (E) der Gestaltungsmittel (T) erste Definitionsmittel (F) zum Definieren der Parameter jeder der Vorrichtungen umfassen,
wobei die ersten Konfigurationsmittel (E) der Gestaltungsmittel (T) zweite Definitionsmittel (G) zum Definieren der sich von den Vorrichtungen geteilten Mitteilungen und Variablen umfassen, und
wobei die ersten Konfigurationsmittel (E) der Gestaltungsmittel (T) dritte Definitionsmittel (H) zum Definieren der persistenten Variablen des Netzwerks von Vorrichtungen umfassen.

2. System nach Anspruch 1, **dadurch gekennzeichnet, dass** die Realisierungsmittel (A) des Grafikmodells erste Auswahlmittel (B) des wenigstens einen Modells einer Vorrichtung aus einer vordefinierten Gruppe von möglichen Modellen verfügbarer Vorrichtungen umfassen.

3. System nach Anspruch 2, **dadurch gekennzeichnet, dass** die Realisierungsmittel (A) eines Grafikmodells zweite Auswahlmittel (C) wenigstens eines Modells eines Kanals umfassen, der zum elektronischen Verbinden einer Mehrzahl von Vorrichtungen geeignet ist, ausgewählt aus einer vordefinierten Gruppe möglicher Modelle verfügbarer Kanäle.

4. System nach Anspruch 3, **dadurch gekennzeichnet, dass** die Realisierungsmittel (A) eines Grafikmodells Mittel zum Zeichnen (D) des Grafikmodells des Netzwerks von Vorrichtungen ausgehend von den Modellen der ausgewählten Vorrichtungen und der Modelle der ausgewählten Kanäle umfassen.

5. System nach Anspruch 4, **dadurch gekennzeichnet, dass** dieses wenigstens eine erste Speichereinheit (DB 1) umfasst, die geeignet ist zum Speichern wenigstens eines von den Modellen verfügbarer Vorrichtungen und den Modellen verfügbarer Kanäle.

6. System nach einem oder mehreren der vorhergehenden Ansprüche, **dadurch gekennzeichnet, dass** die zweiten Konfigurationsmittel (I) einer Grafikschnittstelle Mittel für die Realisierung wenigstens einer Grafikseite umfassen, welche wenigstens ein funktionales Element für das Management und/oder die Kontrolle wenigstens einer der Vorrichtungen (DEV1, DEV2) des Netzwerks von Vorrichtungen (NT) hat.

7. System nach Anspruch 6, wenn dieser abhängig ist von Anspruch 5, **dadurch gekennzeichnet, dass** dieses umfasst wenigstens eine zweite Speichereinheit (DB2), die geeignet ist zum Speichern wenigstens eines von den sich von den Vorrichtungen geteilten Parametern der Vorrichtungen, den Mitteilungen und den Variablen, den persistenten Variablen des Netzwerks von Vorrichtungen und der Grafikseite.

8. System (S) nach einem oder mehreren der vorhergehenden Ansprüche, **dadurch gekennzeichnet, dass** dieses Kompilierungsmittel (O) des Management- und Kontrollcodes für die Generierung eines Codes umfasst, der durch wenigstens eine der Vorrichtungen (DEV1, DEV2) des Netzwerks (NT) von Vorrichtungen ausgeführt werden kann.

9. System nach einem oder mehreren der vorhergehenden Ansprüche, **dadurch gekennzeichnet, dass** dieses Mittel zum Updaten des Management- und Kontrollcodes für wenigstens eine der Vorrichtungen des Netzwerks von Vorrichtungen umfasst.

10. System nach einem oder mehreren der vorhergehenden Ansprüche, **dadurch gekennzeichnet, dass** dieses Mittel zum Aufzeichnen von Ereignissen während des Betriebs des Netzwerks von Vorrichtungen umfasst.

11. System nach einem oder mehreren der vorhergehenden Ansprüche, **dadurch gekennzeichnet, dass** dieses Mittel zum Identifizieren und Authentifizieren von zuständigen Bedienern wenigstens einer der Vorrichtungen des Netzwerks von Vorrichtungen umfasst.

12. System nach einem oder mehreren der vorhergehenden Ansprüche, **dadurch gekennzeichnet, dass** dieses Mittel zum Fernzugriff auf wenigstens eine der Vorrichtungen des Netzwerks von Vorrichtungen umfasst.

13. Verwendung eines Systems (S) nach einem der vorhergehenden Ansprüche für die Erzeugung und automatische Konfiguration eines industriellen Automationsnetzwerks von Vorrichtungen, insbesondere in den Automotive-Sektoren.

## Revendications

1. Système (S) pour la configuration automatique d'un réseau de dispositifs d'automatisation industrielle, en particulier dans le secteur automobile,
ledit système comprenant :
- un moyen de conception (T) pour la conception de la configuration d'au moins un réseau de dispositifs (NT, DEV1, DEV2), et
- un moyen de génération automatique (L) pour générer automatiquement le code de commande et de gestion dudit réseau de dispositifs (NT, DEV1, DEV2) à partir de la configuration conçue,
- dans lequel ledit moyen de conception (T) comprend :
un premier moyen de configuration (E) des paramètres et des messages d'au moins l'un (DEV1, DEV2) des dispositifs dudit réseau (NT) de dispositifs, un deuxième moyen de configuration (I) d'une interface graphique de commande et de gestion d'au moins l'un (DEV1, DEV2) des dispositifs dudit réseau (NT) de dispositifs, et
un moyen de réalisation (A) d'au moins un modèle graphique dudit réseau de dispositifs (NT, DEV1, DEV2), et
dans lequel ledit moyen de génération automatique (L) pour la génération automatique dudit code de commande et de gestion comprend : un premier moyen de création (M) pour créer les paramètres et les messages configurés par ledit premier moyen de configuration (E), pour au moins l'un (DEV1, DEV2) des dispositifs à programmer dudit réseau (NT) de dispositifs,
dans lequel
ledit moyen de génération automatique (L) comprend en outre un deuxième moyen de création (N) de l'interface graphique configurée par ledit deuxième moyen de configuration (I), pour au moins l'un (DEV1, DEV2) des dispositifs à programmer dudit réseau (NT) de dispositifs et
ledit système (S) comprend en outre un ou plusieurs canaux pour relier plusieurs interfaces homme-machine et/ou plusieurs dispositifs de commande et de gestion, de préférence des automates logiques programmables et des unités de commande électroniques,
**caractérisé en ce que**
ledit premier moyen de configuration (E) dudit moyen de conception (T) comprend un premier moyen de définition (F) pour définir les paramètres de chacun desdits dispositifs,
dans lequel ledit premier moyen de configuration (E) dudit moyen de conception (T) comprend un deuxième moyen de définition (G) pour définir les messages et les variables partagés par lesdits dispositifs, et
dans lequel ledit premier moyen de configuration (E) dudit moyen de conception (T) comprend un troisième moyen de définition (H) pour définir les variables persistantes dudit réseau de dispositifs.

2. Système selon la revendication 1, **caractérisé en ce que** ledit moyen de réalisation (A) d'un modèle graphique comprend un premier moyen de sélection (B) d'au moins un modèle d'un dispositif à partir d'un groupe prédéfini de modèles possibles des dispositifs disponibles.

3. Système selon la revendication 2, **caractérisé en ce que** ledit moyen de réalisation (A) d'un modèle graphique comprend un deuxième moyen de sélection (C) d'au moins un modèle de canal, adapté pour relier électroniquement une pluralité desdits dispositifs, choisis parmi un groupe prédéfini de modèles possibles de canaux disponibles.

4. Système selon la revendication 3, **caractérisé en ce que** ledit moyen de réalisation (A) d'un modèle graphique comprend un moyen pour le traçage (D) dudit modèle graphique du réseau de dispositifs à partir des modèles des dispositifs sélectionnés et par les modèles des canaux sélectionnés.

5. Système selon la revendication 4, **caractérisé en ce qu'**il comprend au moins une première unité de mémoire (DB1) apte à stocker au moins l'un parmi lesdits modèles de dispositifs disponibles et lesdits modèles de canaux disponibles.

6. Système selon une ou plusieurs des revendications précédentes, **caractérisé en ce que** ledit deuxième moyen de configuration (I) d'une interface graphique comprend un moyen pour la réalisation d'au moins une page graphique, qui a au moins un élément fonctionnel pour la gestion et/ou la commande d'au moins l'un des dispositifs (DEV1, DEV2) dudit réseau de dispositifs (NT).

7. Système selon la revendication 6, lorsqu'elle dépend de la revendication 5, **caractérisé en ce qu'**il comprend au moins une deuxième unité de mémoire (DB2) apte à stocker au moins un élément parmi les paramètres desdits dispositifs, les messages et les variables partagés par lesdits dispositifs, les variables persistantes dudit réseau de dispositifs et ladite page graphique.

8. Système (S) selon une ou plusieurs des revendications précédentes, **caractérisé en ce qu'**il comprend un moyen de compilation (O) dudit code de commande et de gestion pour la génération d'un code qui peut être exécuté par au moins l'un des dispositifs (DEV1, DEV2) dudit réseau (NT) de dispositifs.

9. Système selon une ou plusieurs des revendications précédentes, **caractérisé en ce qu'**il comprend un moyen pour mettre à jour le code de commande et de gestion pour au moins l'un des dispositifs dudit réseau de dispositifs.

10. Système selon une ou plusieurs des revendications précédentes, **caractérisé en ce qu'**il comprend un moyen pour enregistrer des événements pendant l'opération dudit réseau de dispositifs.

11. Système selon une ou plusieurs des revendications précédentes, **caractérisé en ce qu'**il comprend un moyen pour identifier et authentifier des opérateurs chargés d'au moins l'un des dispositifs dudit réseau de dispositifs.

12. Système selon une ou plusieurs des revendications précédentes, **caractérisé en ce qu'**il comprend un moyen pour accéder à distance à au moins l'un des dispositifs dudit réseau de dispositifs.

13. Utilisation d'un système (S) selon l'une des revendications précédentes, pour la création et la configuration automatique d'un réseau de dispositifs d'automatisation industrielle, en particulier dans le secteur automobile.
